Europäisches Patentamt

European Patent Office

Office européen des brevets

(19)

(11) Publication number : **0 416 748 B1**

(12) **EUROPEAN PATENT SPECIFICATION**

(45) Date of publication of patent specification :
30.03.94 Bulletin 94/13

(51) Int. Cl.⁵ : **B01J 41/14, B01J 41/06**

(21) Application number : **90308628.8**

(22) Date of filing : **06.08.90**

(54) **Quaternised pei silica solid supports for chromatography.**

(30) Priority : **07.08.89 US 390324**

(43) Date of publication of application :
**13.03.91 Bulletin 91/11**

(45) Publication of the grant of the patent :
**30.03.94 Bulletin 94/13**

(84) Designated Contracting States :
**AT BE CH DE FR GB IT LI LU NL SE**

(56) References cited :
**DE-A- 1 953 421**
**DE-A- 2 638 764**
**FR-A- 1 169 721**
**FR-A- 2 064 522**
**FR-A- 2 260 589**
**FR-A- 2 401 190**
**US-A- 4 540 486**

(73) Proprietor : **J.T. Baker Inc.**
**222 Red School Lane**
**Phillipsburg, New Jersey 08865 (US)**

(72) Inventor : **Kakodkar, Sunil V.**
**889 Blair Road**
**Bethlehem, Pennsylvania 18017 (US)**
Inventor : **Ramsden, Hugh E.**
**2080 Wood Road**
**Scotch Plains, New Jersey 07076 (US)**

(74) Representative : **Perry, Robert Edward et al**
**GILL JENNINGS & EVERY Broadgate House 7**
**Eldon Street**
**London EC2M 7LH (GB)**

## Description

This invention relates to novel solid, bonded phase silica products, their use in the separation and purification of proteins, especially basic proteins at high pH, and the preparation of said bonded phase products. More particularly, this invention relates to quaternized non-crosslinked polyethyleneimine bonded phase silica products, their use as solid phases supports for column packing in liquid chromatography for the separation and purification of proteins, especially of basic proteins having high pH isoelectric points and the preparation of said solid supports.

Recently, new non-crosslinked covalently bound polyethyleneiminopropyl trimethoxy silane silica gel (PEI-PrSi-Silica gel) and polyethyleneiminopropyl trimethoxy silane controlled pore glass (PEI-PrSi-CPG) bonded phase products for column chromatography have been described by Hugh Ramsden in his U.S. Patent 4,540,486, issued September 10, 1985, as being useful for the separation and analysis of protein mixtures.

While such PEI-Pr-Silica gel and PEI-PrSi-CPG bonded phase products have been found to be quite useful as solid phases for column packing in liquid chromatography for the separation and purification of proteins, these novel bonded phases were not sufficiently strong cation exchanger for certain proteins, especially proteins having low isoelectric points, that is, below about 5 or so. Accordingly, novel sulfonic derivatives of N-acylated covalently bound, non-crosslinked polyethyleneimine bonded phase silicas or controlled pore glasses were provided, as disclosed in Hugh Ramsden and David Nau, U.S. Patents 4,661,248 and 4,721,573, which issued on April 25, 1987 and January 26, 1988, respectively.

However, neither the original non-crosslinked covalently bound PEI-PrSi-Silica gel or PEI-PrSi-CPG bonded phase products nor the sulfonic derivatives of the N-acylated PEI-PrSi-Silica gel or PEI-PrSi-CPG are particularly useful for binding and separating basic proteins at a high pH, such proteins as cytochrome, lysozyme and the like. The solid phase supports of the Ramsden and Nau patents are cationic exchangers useful at low pH. The PEI-PrSi-Silica gel and PEI-PrSi-CPG solid phase supports of the aforementioned Ramsden patent are weak anion exchangers binding only at about pH 8.5 and below and it becomes necessary to titrate or protonate the surface of such support for purification of basic proteins.

It is therefore desirable that a solid based support which is a strong anion exchanger for chromatography of proteins be available which would be susceptible to rapid equilibration and does not involve titration of the support, which has a high capacity at high pH and has the ability to bind basic proteins having high pH isoelectric points, i.e. above about pH 9.

It is also desirable that a convenient method for the preparation of such a strong anion exchanger be available for the production of same and without any extensive product side reactions that would be harmful to the surface of the solid phase bonded support.

Solid phase bonded supports which are strong anion exchangers for chromatography, especially for chromatography of basic proteins at high pH, are provided by quaternized PEI-PrSi-Silica gel and PEI-PrSi-CPG bonded phase products.

The novel quaternized polyethyleneimine solid phase supports are prepared by a process in which the PEI-PrSi-Silica gel and PEI-PrSi-CPG are subjected to reductive alkylation by an Eschweiler-Clarke reaction to theoretically convert all the primary and secondary amines of the PEI-PrSi-Silica gel and PEI-PrSi-CPG bonded phases to tertiary amines followed by the reaction of the tertiary amines of said product with a quaternization reagent, such as a methyl halide, preferably methyl chloride, to produce the desired novel quaternized polyethyleneimine solid phase anion exchangers.

The covalently bound, non-crosslinked polyethyleneimine silica based solid supports employed to provide the novel quaternized solid phase products of this invention are the reaction products of polyethyleneiminopropyl trimethoxy silane with particulate silica gel or particulate controlled pore glass which, for the purposes of the present invention, are designated by the general formula:

Silica-PrSi-PEI.

The term Silica-PrSi-PEI as used in this invention means the covalently bound, non-crosslinked polyethyleneimine bonded phase solid support which is the reaction product of (1) either a) particulate silica gel having an average particle diameter of from about 1 to 200, preferably 3 to 70, μm and an average pore size of from about 0 to 100, (0 to 1000), preferably about 5 to 10 nm (50 to 1000 Angstrom units), or b) particulate controlled pore glass having an average particle diameter of from about 1 to about 200 μm and an average pore size of from about 0, preferably about 4 nm (40), to about 100 nm (1000 Angstrom units), with (2) polyethyleneiminopropyl trimethoxy silane having an average molecular weight of from about 400 to about 1800. Such Silica-PrSi-PEI products, and their preparation are disclosed and claimed in the aforementioned U.S. Patent 4,540,486. Such products are currently available from J. T. Baker Inc. as BAKERBOND ® column chromatography matrixes.

The novel solid phase chromatography supports of this invention are quaternized Silica-PrSi-PEI supports in which the primary and secondary amino groups of the polyethyleneimine (PEI) moiety have been converted to tertiary amino groups and the tertiary amino groups subsequently quaternized with a suitable quaternization reagent which is capable of quaternizing the tertiary amino group of the PEI moiety.

Thus, the quaternized PEI based chromatography supports of this invention may be represented by the idealized general formula

$$\text{Silica-PrSi-(PEI}^+\text{) X}^-$$

wherein:

Silica-PrSi-PEI is as defined hereinbefore,

the + symbol indicates that all the amino groups of the PEI moiety have been converted to tertiary amino groups by alkylation addition to each amino nitrogen of up to two straight chain alkyl groups of from 1 to 4 carbon atoms and wherein at least about 30% of the tertiary amino groups of the PEI moiety have been quaternized by the addition to the amino nitrogens of the tertiary amino groups of a further straight chain alkyl group of from 1 to 4 carbon atoms,

and $X^-$ is any suitable anion, but is preferably chlorine, bromine or iodine, and most preferably chlorine. The PEI is generally quaternized to about 30% to about 80% or more of theoretical, and is usually about 60% to about 70% quaternized.

The direct alkylation methylation of Silica-PrSi-PEI with an alkyl halide, such as methyl iodide, is not suitable for production of the novel quaternized polyethyleneimine solid phase supports of this invention due to the reaction of alkyl halide with primary and secondary amines producing N-alkylated species as well as the corresponding acid, for example, hydriodic acid if methyl iodide is employed as the alkylating agent. This acid would compete with the alkyl halide for quaternization and produce an undesirable mixture of alkylated quaternary and protonated quaternary products. Moreover, it was observed that such a reaction did not go to completion readily and produced widely varying reaction products.

It has been discovered that if all the primary and secondary amines in the PEI moiety are first converted to tertiary amines in an Eschweiler-Clarke reaction the product thereof can be readily converted to the desired quaternized polyethyleneimine bonded phase products of this invention by further reaction with a suitable quaternization agent.

Preferably, the primary and secondary amines of the PEI moiety are subjected to reductive alkylation, preferably methylation, in an Eschweiler-Clarke reaction employing formaldehyde and formic acid in a suitable solvent, such as, for example, deionized water or acetonitrile, preferably acetonitrile. The reaction is generally conducted for a period of up to about 2 to 3 hours at a temperature of up to about 80°. While formaldehyde and formic acid are the preferred reactants for this reductive methylation, it is also possible to employ formaldehyde with sodium cyanoborohydride or sodium borohydride in trifluroacetic acid or acetonitrile.

The Silica-PrSi-PEI reactants in which the primary and secondary amine have been converted to tertiary amines are then quaternized, preferably with methyl chloride employing a suitable solvent, preferably acetonitrile, at a temperature of about 80° or more and under pressure, for example, under a pressure of from about 200 to 400 psi (140.62x10³ to 281.24x10³ kg/m²) for a period of up to about 30 hours. Generally at least about 30% and preferably about 60% or more of the theoretical of the PEI moiety is quaternized.

The preferred quaternized derivatives of this invention are those in which the PEI-PrSi-Silica gel particulate silica gel has an average particle diameter of from about 5 to about 70 μm and an average pore size of from about 5 (50) to about 100 nm (1000 Angstrom units) and the polyethyleneiminopropyl trimethoxy silane moeity has an average molecular weight of from about 400 to about 1200; and in which about 60% or more, preferably about 60% to 70% of theoretical of the PEI amino groups are quaternized.

The novel quaternized derivatives of covalently bound non-crosslinked polyethyleneimine silica based solid supports of this invention are especially useful as strong anion exchangers for column chromatography having a high capacity at high pH, i.e. about above pH 9, with an ability to bind basic proteins, such as, for example, cytochrome, lysozyme and the like, having isoelectric points above about pH 9. The quaternized products do not require titration to be useful and are rapidly equilibrated. These solid supports separate basic proteins with well-defined peaks and good selectivity and have a high capacity at high pH enabling quantitative recovery of protein. The novel bonded phase products are especially useful as packing for column chromatography and are particularly suitable with modern HPLC instrumentation. The packing may be of various mesh sizes, for example, from about 50 to about 600 mesh.

According to this invention, therefore, there are provided chromatographic columns suitable for liquid chromatography packed with (as the solid phase) the quaternized covalently bound, non-crosslinked polyethyleneimine reaction product of particulate silica gel having an average particle diameter of from about 1 to about 200, preferably about 3 to about 70, μm and an average pore size of from about 0 to about 100 (1000), preferably about 5 (50) to about 100 nm (1000 Angstrom units), or particulate controlled pore glass having an average particle diameter of from about 1 to about 200, preferably about 37 to about 177 μm and an average pore size of from about 0 to about 800 (8000), preferably about 4 (40) to about 100 nm (1000 Angstrom units), with polyethyleneiminopropyl trimethoxy silane having an average molecular weight of from about 400 to about 1800.

The products, their preparation and use according to the present invention are illustrated but not limited by the following illustrative examples.

In the following examples all percentages are by weight unless indicated otherwise and temperatures are in degrees C. The PEI-PrSi-Silica gel reactant employed is J. T. Baker Inc., BAKERBOND ® Silica gel product No. 7264-R, having an average particle diameter of about 40 μm unless indicated otherwise. Examples 1 to 12 illustrate the conversion of primary and secondary amine groups in PEI-PrSi-Silica gel to tertiary amine groups.

## EXAMPLE 1

To a slurry of 15 grams of PEI-PrSi-Silica gel in 50 ml deionized water, in a 250 ml round bottom flask, 1.75 ml formaldehyde and 3.5 ml formic acid were added. An additional 45 ml water was added and the suspension was placed on a steam bath at a temperature of about 98-100° for about five hours. The product was filtered then washed 2x250 ml deionized water, 1x250 ml acetone and 2x250 ml chloroform and then dried at about 80° for about four hours. Elemental analysis of the PEI-PrSi-Silica gel in which the primary and secondary amine groups have been reductively methylated to tertiary amines was as follows: C = 6.7, H = 1.61, N = 2.32, C/N = 2.88.

## EXAMPLE 2

To 100 ml of trifluroacetic acid, in a 3-necked round bottom flask fitted with a condenser, a stirrer, a thermometer and a nitrogen inlet, cooled to 0-5° by an ice bath, 11.34 g of sodiumborohydride was added. A very exothermic reaction occurred and the temperature rose to about 25°, but was not permitted to go beyond 25°. After the addition of sodiumborohydride was complete, 7.0 g of paraformaldehyde was added and the ice bath removed and the mixture was stirred for about 10 minutes. Then 15 g of PEI-PrSi-Silica gel was added in less than about 5 minutes and the mixture allowed to warm to room temperature. After about four hours, water was added to dilute the reaction mixture which was then filtered, washed 2x250 ml deionized water. It took more than 24 hours for the filtration to be over and the product appeared gelatinous.

The solid product was suspended in 200 ml of 1 molar sodium carbonate for about 10 minutes at room temperature, filtered, washed 2x250 ml deionized water and 2x250 ml acetone. Elemental analysis: C = 6.85, H = 1.86, N = 2.60, C/N = 2.63.

## EXAMPLE 3

To 15 g of PEI-PrSi-Silica gel placed in a 3-necked round bottom flask fitted with a condenser and a mechanical stirrer, 100 ml of acetonitrile was added, followed by 9 ml of formaldehyde. The suspension was stirred and 2.31 g of sodiumcyanoborohydride was added in one lot. After about two hours the reaction was stopped, filtered, washed 2x250 ml deionized water and 2x200 ml methanol and then dried at about 80° for about four hours. Elemental analysis: C = 7.55, H = 1.87, N = 2.72, C/N = 2.77.

## EXAMPLE 4

In a 3-necked flask containing 15 g of PEI-PrSi-Silica gel 200 ml of acetonitrile was added followed by 5 ml of formaldehyde and 3 ml of formic acid. The mixture was stirred mechanically and heated to about 60°. The mixture was stirred at 60° for about 19 hours. The mixture was then cooled at room temperature, filtered, washed 2x250 ml deionized water and 2x250 ml methanol.

An unusual slow filtration occurred. Vacuum was kept on for about 60 hours. The second methanol wash was not completely filtered. The whole solid was slurried with methanol and decanted. After which it was filtered again, washed 1x250 ml methanol and 2x250 ml acetone in another generally slow filtration and then dried at about 80° for about four hours. Elemental analysis: C = 7.73, H = 1.96, N = 2.41, C/N = 3.20.

## EXAMPLE 5

In a 3-necked flask containing 15 g of PEI-PrSi-Silica gel (0.023g/atom nitrogen), 200 ml of deionized water was added. This was followed by addition of 5 ml of formaldehyde and 3 ml of formic acid. The mixture was stirred and heated at about 98° for about 18 hours. Thereafter the reaction mixture was cooled to room tem-

4

perature, slowly filtered, washed 1x250 ml deionized water and 3x250 ml methanol and then dried at about 80° for about four hours. Elemental analysis: C = 6,41, H = 1.72, N = 2.07, C/N = 3.09.

## EXAMPLE 6

To 15 g of PEI-PrSi-Silica gel (0.023g/atom nitrogen) in a 250 ml 3-necked round bottom flask fitted with a condenser, stirrer and a thermometer, 150 ml of acetonitrile was added, followed by 2 ml of formaldehyde and 3.5 ml of formic acid. The mixture was heated to about 81° and kept at that temperature for about five hours then cooled to room temperature, filtered, washed 3x250 ml deionized water and 3x250 ml methanol. The product was then dried at about 80° for about four hours. Elemental analysis: C = 7.46, H = 2.02, N = 2.51, C/N = 2.97.

## EXAMPLE 7

To 20 g PEI-PrSi-Silica gel in a 3-necked flask fitted with a stirrer, a condenser and a thermometer, 100 ml of acetonitrile was added followed by 2.62 ml formaldehyde (37% solution) and 3 ml formic acid (88% solution). Then 30 ml acetonitrile was added and heating started. After the temperature reached 80°, it was kept at that temperature for about 5 hours. The product was filtered, washed 3x250 ml deionized water and 3x250 ml methanol and then dried at about 80° for about four hours. Elemental analysis: C = 7.99, H = 1.48, N = 2.59, C/N = 3.08.

## EXAMPLE 8

The preparation of Example 7 was repeated except that the reaction mixture was heated at about 80° for about 21 hours. The reaction mixture was then slowly filtered, washed 3x250 ml deionized water and 3x250 ml methanol and dried at about 80° for about four hours. Elemental analysis: C = 7.95, H = 1.62, N = 2.58, C/N = 3.08.

## EXAMPLE 9

The preparation of Example 7 was again repeated except that the reaction mixture was heated at about 80° for about one and one-half hours, filtered, washed 3x250 ml deionized water and 3x250 ml methanol. The product was then dried at about 80° for about four hours. Elemental analysis: C = 8.0%, H = 1.70%, N = 2.56%, C/N = 3.12.

## EXAMPLE 10

The preparation of Example 7 was again repeated except that the reactants were mixed and kept in a shaker at room temperature for about 22 hours. The reaction mixture was then filtered, washed 3x250 ml deionized water and 3x250 ml methanol and dried at about 80° for about four hours. Elemental analysis: C = 7.19, H = 1.49, N = 2.61, C/N = 2.75.

## EXAMPLE 11

To a 3-necked round bottom 500 ml flask containing 40 g of PEI-PrSi-Silica gel (0.076 g/atom nitrogen), 200 ml of acetonitrile was added followed by addition of 5.25 ml formaldehyde (37% solution) and 6 ml formic acid (88% solution). Then 100 ml of acetonitrile was added to the reaction vessel and the mixture was heated to about 80° and kept at that temperature for about 3 hours. The reaction mixture was then filtered, washed 4x250 ml deionized water and 3x250 ml methanol and dried at about 80° for about four hours. Elemental analysis: C = 7.63, H = 1.69, N = 2.54, C/N = 3.00.

## EXAMPLE 12

The product of Example 11 (20 g), 200 ml deionized water and 2.5 ml triethylamine were mixed in a 3-necked round bottom flask fitted with a stirrer, a condenser and a thermometer and heated to about 60° and kept at that temperature for about 19 hours. Then the reaction mixture was filtered, washed 3x250 ml deionized water and 3x250 ml methanol and dried at about 80° for about four hours. Elemental analysis: C = 7.56, H = 1.61, N = 2.56, C/N = 2.95.

The pH of the bonded phases (5% solution or 1 g of bonded phase in 20 ml deionized water) of both Examples 11 and 12 were measured. The pH was measured by first doing a two point calibration.

The pH of the product of Example 11 (before triethylamine washing) = 5.05. The pH of the product of Example 12 (after triethylamine washing) = 8.27. These results indicate the possible presence of formate salt complexes in Example 11 which will increase the apparent C/N ratio. However, the C/N ratio after the triethylamine wash indicates complete methylation.

Quaternization of PEI-PrSi-Silica solid supports in which the primary and secondary amino groups have been converted to tertiary amine groups is illustrated by the following Examples 13 to 18.

## EXAMPLE 13 - 16

Each of the exhaustively methylated products of Examples 1, 4, 5 and 6 were subjected to the following processing. Product from the example was placed in autoclave glass liner, 100 ml acetonitrile was added and the glass liner was placed in a 3-liter rocking autoclave. An additional 100 ml of acetonitrile was added to the outside of the glass liner to prevent loss of volume inside the liner by evaporation. The autoclave was purged with helium (3x300 psi) then methyl chloride (1x60 psi). The autoclave was left open to the cylinder with two check valves to prevent draw back into the cylinder. The final pressure was 80 psi ($56.248 \times 10^3$ kg/m$^2$). The reaction was heated to about 80° and was rocked for about 24 hours. The quaternized products were dried at about 80° for about 4 hours and analyzed. Results of the analysis are reported in the following Table 1.

T A B L E   1

| Example No. | Reactant Example No. | Pre-Quaternization Elemental analysis | C/N | Post-Quaternization Elemental Analysis | C/N | N/Cl |
|---|---|---|---|---|---|---|
| 13 | 1 | C=6.7, H=1.61, N=2.32 | 2.88 | C=7.47, H=1.86, N=2.25, Cl=3.48 | 3.32 | 0.64 |
| 14 | 4 | C=7.72, H=1.96, N=2.41 | 3.20 | C=8.46, H=2.06, N=2.21, Cl=4.24 | 3.82 | 0.52 |
| 15 | 5 | C=6.41, H=1.72, N=2.07 | 3.09 | C=6.84, H=1.85, N=1.88, Cl=3.61 | 3.63 | 0.52 |
| 16 | 6 | C=7.46, H=2.02, N=2.51 | 2.97 | C=8.18, H=2.01, N=2.32, Cl=4.14 | 3.52 | 0.56 |

## EXAMPLE 17

In a bomb reaction vessel containing 12 g of the exhaustively methylated product of Example 9 and 150 ml acetonitrile, stirring was started and the mixture flushed once with methyl chloride. After equilibrating, methyl chloride was disconnected and heating commenced until a constant temperature of 80° was obtained. The reaction was maintained at that temperature and at a pressure of about 200 psi ($140.62 \times 10^3$ kg/m$^2$) for about 19 hours after which the heating was stopped and the reaction mixture permitted to cool to room temperature. The product was filtered, washed 2x150 ml acetonitrile and 2x150 ml methanol and dried at about 80° for about four hours.

## EXAMPLE 18

Another quaternization reaction was conducted in a reaction identical to Example 17 except that 15 g of the exhaustively methylated, triethylamine washed product of Example 12 was employed as the reactant in place of the product of Example 9.

Analysis of the quaternized products of Examples 17 and 18 produced the results reported in Table 2.

T A B L E  2

| Example No. | Reactant Example No. | Pre-Quaternization Elemental analysis | | Post-Quaternization Elemental Analysis | | |
|---|---|---|---|---|---|---|
| | | | C/N | | C/N | N/Cl |
| 17 | 9 | C=8.0, H=1.70, N=2.56 | 3.12 | C=7.16, H=1.73, N=1.86, Cl=3.97 | 3.84 | 0.46 |
| 18 | 12 | C=7.56, H=1.61, N=2.56 | 2.95 | C=7.15, H=1.63, N=1.74, Cl=3.93 | 4.01 | 0.44 |

8

## EXAMPLE 19

A standard analytical column (4.6 mm internal diameter x 50 mm length) is slurry packed at high pressure (7.500 psi) with a quaternized derivative of PEI-PrSi-Silica gel (about 5 μm) obtained by a process as described in Example 13 as the bonded phase. The slurry consists of about 1.0 grams of the quaternized derivative of PEI-PrSi-Silica gel in 10 mls methanol. After pumping the slurry into the column, an additional 100 mls methanol are then pumped through the column at the same pressure. Chromatography of a protein sample containing 7 mg total protein (cytochrome C - horse heart type VI; chymotrypsinogen A - bovine pancreas; carbonic anhydrase - bovine erythrocyte; conalbumin II - bovine milk; ovalbumin - hen's egg; β-lactoglobulin B - bovine milk and β-lactoglobulin A - bovine milk) was conducted on said column with an initial (A) buffer of 25 mM Tris at pH 7.7, and an elution (B) buffer of 2 M NH$_4$OAc at pH 5.8 with a linear gradient of 100% A to 100% B over 30 minutes at a flow rate of 2.0 ml/min. at a back pressure of 2757,9 kPa (400 psi). Proteins were detected by UV absorbance at 280 nm at 0.5 AUFS. The sample volume was 100 microliters and consisted of 7 mg total protein in buffer A. Each protein eluted as a concentrated band, well separated from each other. Typical mass recoveries for the individual proteins was greater than ninety-five percent of the original amount in the sample.

## Claims

1. A quaternised derivative of covalently-bound, non-cross-linked polyethyleneimine-bonded phase silica, having the formula

   Silica-PrSi-(PEI$^+$)X$^-$

   wherein Silica-PrSi-PEI is the covalently-bound, non-crosslinked polyethyleneimine-bonded phase obtainable by reacting (1) a silica which is particulate silica gel or particulate controlled pore glass and which has an average particle diameter of 1 to 200 μm and an average pore size of 0 to 100 nm (0 to 1000 Å) with (2) polyethyleneiminopropyltrimethoxysilane having an average molecular weight of 400 to 1800;

   the + symbol indicates that all the amine groups of the PEI moiety are at least tertiary amine groups having two straight-chain C$_{1-4}$ alkyl groups and at least 30% of the tertiary amine groups are quaternised, by a further straight-chain C$_{1-4}$ alkyl group; and

   X$^-$ is an anion.

2. A derivative according to claim 1, wherein X is Cl, Br or I.

3. A derivative according to claim 2, wherein X is Cl.

4. A derivative according to any preceding claim, wherein the PEI moiety is quaternised to at least 60% of the theoretical.

5. A derivative according to any preceding claim, wherein the silica is particulate silica gel having an average particle diameter of 3 to 70 μm and an average pore size of 50 to 1000 Å (5 to 100 nm) or particulate controlled pore glass having an average particle diameter of 1 to 200 μm and an average pore size of 40 to 1000 Å (4 to 100 nm).

6. A derivative according to claim 5, wherein the silica is the particulate silica gel.

7. A derivative according to claim 5 to claim 6, wherein the particulate silica gel has an average particle diameter of 5 to 70 μm, and the polyethyleneiminopropyl silane moiety has an average molecular weight of 400 to 1200.

8. A solid-phase extraction process for the purification and separation of protein having an isoelectric point above pH 9, wherein the solid-phase is a derivative according to any of claims 1 to 7.

9. A process for the preparation of a derivative according to any of claims 1 to 7, comprising:
   (1) reductively alkylating the primary and secondary amine groups of the PEI moiety of a covalently bound non-cross-linked Silica-PrSi-PEI bonded phase silica, to convert the primary and secondary amine groups to tertiary amine groups; and
   (2) quaternising at least 30% of the tertiary amine groups of the Silica-PrSi-PEI bonded phase.

10. A process according to claim 9, wherein the primary and secondary amine groups are reductively alkylated with formaldehyde and formic acid, and the tertiary amine groups are quaternised by reaction with methyl chloride.

## Patentansprüche

1. Quaternisiertes Derivat von Verbundphasen-Siliciumdioxid mit kovalent gebundenem, nicht vernetztem Polyethylenimin der Formel

$$\text{Siliciumdioxid-PrSi-(PEI}^+)\text{X}^-$$

wobei Siliciumdioxid-PrSi-PEI die kovalent gebundene, nicht vernetzte Polyethylenimin-Verbundphase ist, erhältlich durch Umsetzen von (1) Siliciumdioxid, nämlich körnigem Kieselgel oder Glasteilchen mit bestimmten Poren, welches einen durchschnittlichen Teilchendurchmesser von 1 bis 200 µm und eine durchschnittliche Porengröße von 0 bis 100 nm (0 bis 1000 Å) aufweist mit (2) Polyethyleniminopropyltrimethoxysilan mit einem durchschnittlichen Molekulargewicht von 400 bis 1800; das +-Zeichen bedeutet, daß alle Aminogruppen der PEI-Einheit mindestens tertiäre Aminogruppen mit zwei linearen $C_{1-4}$-Alkylgruppen sind und mindestens 30 % der tertiären Aminogruppen durch eine weitere lineare $C_1$-$C_4$-Alkylgruppe quaternisiert sind; und X ein Anion bedeutet.

2. Derivat nach Anspruch 1, wobei X Cl, Br oder I bedeutet.

3. Derivat nach Anspruch 2, wobei X Cl bedeutet.

4. Derivat nach einem der vorstehenden Ansprüche, wobei die PEI-Einheit zu mindestens 60 % der Theorie quaternisiert ist.

5. Derivat nach einem der vorstehenden Ansprüche, wobei das Siliciumdioxid körniges Kieselgel mit einem durchschnittlichen Teilchendurchmesser von 3 bis 70 µm und einer durchschnittlichen Porengröße von 50 bis 1000 Å (5 bis 100 nm) ist oder aus Glasteilchen mit bestimmten Poren mit einem durchschnittlichen Teilchendurchmesser von 1 bis 200 µm und einer durchschnittlichen Porengröße von 40 bis 1000 Å (4 bis 100 nm) besteht.

6. Derivat nach Anspruch 5, wobei das Siliciumdioxid körniges Kieselgel ist.

7. Derivat nach Anspruch 5 oder 6, wobei das körnige Kieselgel einen durchschnittlichen Teilchendurchmesser von 5 bis 70 µm und die Polyethyleniminopropylsilan-Einheit ein durchschnittliches Molekulargewicht von 400 bis 1200 aufweist.

8. Festphasenextraktionsverfahren zur Reinigung und Trennung von Proteinen mit einem isoelektrischen Punkt über einem pH-Wert von 9, wobei die Festphase ein Derivat nach einem der Ansprüche 1 bis 7 ist.

9. Verfahren zur Herstellung eines Derivats nach einem der Ansprüche 1 bis 7, umfassend:
(1) reduktive Alkylierung der primären und sekundären Aminogruppen der PEI-Einheit eines Verbundphasen-Siliciumdioxids mit kovalent gebundenem nicht vernetztem Siliciumdioxid-PrSi-PEI, zur Umwandlung der primären und sekundären Aminogruppen in tertiäre Aminogruppen und
(2) Quaternisieren von mindestens 30 % der tertiären Aminogruppen der Siliciumdioxid-PrSi-PEI-Verbundphase.

10. Verfahren nach Anspruch 9, wobei die primären und sekundären Aminogruppen reduktiv mit Formaldehyd und Ameisensäure alkyliert werden, und die tertiären Aminogruppen durch Umsetzen mit Methylenchlorid quaternisiert werden.

## Revendications

1. Dérivé quaternisé de silice à phase liée à une polyéthylèneimine non réticulée liée par covalence, ayant la formule

$$\text{silice-PrSi-(PEI}^+)\text{X}^-$$

dans laquelle

silice-PrSi-PEI est la phase liée avec une polyéthylèneimine non réticulée liée par covalence, pouvant être obtenue par réaction de (1) une silice qui est un gel de silice particulaire ou du verre poreux contrôlé particulaire et qui a un diamètre moyen de particules de 1 à 200 µm et une taille moyenne de pores de 0 à 100 nm (0 à 1000 Å) avec (2) du polyéthylèneiminopropyl-triméthoxysilane ayant une masse moléculaire moyenne de 400 à 1800;

le symbole + indique que tous les groupes amine de la partie PEI sont des groupes amine au moins tertiaires ayant deux groupes alkyle linéaires en $C_1$-$C_4$ et qu'au moins 30 % des groupes amine tertiaires sont quaternisés par un autre groupe alkyle linéaire en $C_1$-$C_4$;

et $X^-$ est un anion.

2. Dérivé selon la revendication 1, dans lequel X est Cl, Br ou I.

3. Dérivé selon la revendication 2, dans lequel X est Cl.

4. Dérivé selon l'une quelconque des revendications précédentes, dans lequel la partie PEI est quaternisée à au moins 60 % de la théorie.

5. Dérivé selon l'une quelconque des revendications précédentes, dans lequel la silice est un gel de silice particulaire ayant un diamètre moyen de particules de 3 à 70 µm et une taille moyenne de pores de 50 à 1000 Å (5 à 100 nm) ou du verre poreux contrôlé particulaire ayant un diamètre moyen de particules de 1 à 200 µm et une taille moyenne de pores de 40 à 1000 Å (4 à 100 nm).

6. Dérivé selon la revendication 5, dans lequel la silice est le gel de silice particulaire.

7. Dérivé selon la revendication 5 à la revendication 6, dans lequel le gel de silice particulaire a un diamètre moyen de particules de 5 à 70 µm, et la partie polyéthylèneiminopropyl-triméthoxysilane a une masse moléculaire moyenne de 400 à 1200.

8. Procédé d'extraction en phase solide pour la purification et la séparation de protéines ayant un point isoélectrique supérieur à pH 9, dans lequel la phase solide est un dérivé selon l'une quelconque des revendications 1 à 7.

9. Procédé de préparation d'un dérivé selon l'une quelconque des revendications 1 à 7, dans lequel
(1) on soumet les groupes amine primaires et secondaires de la partie PEI d'une silice à phase liée silice-PrSi-PEI non réticulée liée par covalence à une alkylation réductrice pour transformer les groupes amine primaires et secondaires en groupes amine tertiaires; et
(2) on quaternise au moins 30 % des groupes amine tertiaires de la phase liée silice-PrSi-PEI.

10. Procédé selon la revendication 9, dans lequel on effectue l'alkylation réductrice des groupes amine primaires et secondaires avec du formaldéhyde et de l'acide formique, et on quaternise les groupes amine tertiaires par réaction avec du chlorure de méthyle.